# EUROPEAN PATENT SPECIFICATION

(11) **EP 2 955 618 B1**
(45) Date of publication and mention of the grant of the patent: **21.11.2018**
(21) Application number: 15171414.4
(22) Date of filing: 10.06.2015
(51) Int. Cl.: H04M 1/725, H04N 21/436, G06F 3/0488, G06F 3/0486, G06F 3/01, G06F 3/14, H04W 4/18, H04W 4/21, G08C 17/02

(54) **METHOD AND APPARATUS FOR SHARING CONTENT OF ELECTRONIC DEVICE**
VERFAHREN UND VORRICHTUNG ZUM AUSTAUCH VON INHALTEN EINER ELEKTRONISCHEN VORRICHTUNG
PROCÉDÉ ET APPAREIL DE PARTAGE DE CONTENU D'UN DISPOSITIF ÉLECTRONIQUE

(30) Priority: 10.06.2014 KR 20140069842
(43) Date of publication of application: 16.12.2015
(73) Proprietor: Samsung Electronics Co., Ltd., Gyeonggi-do 443-742 (KR)
(72) Inventor: Kim, Junghun, Suwon-si, Gyeonggi-do 443-742 (KR)
(74) Representative: Nederlandsch Octrooibureau

(56) References cited:
- US-A1- 2011 112 819
- US-A1- 2014 032 722
- US-A1- 2014 149 859
- US-B1- 8 296 728
- Samsung Germany: "Samsung GALAXY NotePRO 12.2 - Side Sync per WLAN", , 1 April 2014 (2014-04-01), XP054976098, Retrieved from the Internet: URL:https://www.youtube.com/watch?v=lGUfcg xb9FY [retrieved on 2015-09-28] -& Samsung Germany: "Samsung GALAXY NotePRO 12.2 - Side Sync per WLAN", , 1 April 2014 (2014-04-01), XP055216583, Retrieved from the Internet: URL:https://www.youtube.com/watch?v=lGUfcg xb9FY [retrieved on 2015-09-28]
- Samsung FR: "Side Sync", , 28 May 2013 (2013-05-28), XP054976096, Retrieved from the Internet: URL:https://www.youtube.com/watch?v=j0Cb8k AVNuo [retrieved on 2015-09-28] -& Samsung Fr: "Side Sync", , 28 May 2013 (2013-05-28), XP055221202, Retrieved from the Internet: URL:https://www.youtube.com/watch?v=j0Cb8k AVNuo [retrieved on 2015-10-15]
- SamsungNotebook: "SS-141(E) : Using Phone Screen Sharing in SideSync", , 17 October 2013 (2013-10-17), XP054976093, Retrieved from the Internet: URL:https://www.youtube.com/watch?v=IonNWm vxhhI [retrieved on 2015-09-25]

## Description

### TECHNICAL FIELD

Various embodiments of the present disclosure relate to a method and an apparatus for processing information of an electronic device.

### BACKGROUND

Currently, with the progress of digital technology, the use of various electronic devices (e.g., mobile communication terminals, smart phones, tablet Personal Computers or "PCs", etc.) capable of performing communication and processing personal information are increasingly common. These electronic device provide voice and video call services, message transmission/reception functions (e.g., a Short Message Service or "SMS", a Multimedia Messaging Service or "MMS", email functionality, etc.) an image capturing function, display and reproduction of images or other media (e.g., animated images, videos and music), an Internet function, a messenger function, or a Social Network Service (SNS).

In particular, an electronic device provides an image sharing function between electronic devices. Through the image sharing function, the electronic device may display an image displayed by another electronic device that is communicatively connected to the electronic device. For example, a display of an image on a PC may be displayed to at least a part of a screen of another electronic device that is connected to the PC. Through the image sharing function, the electronic device may share various content with other electronic devices.

Samsung Germany: "Samsung GALAXY NotePRO 12.2 - Side Sync per WLAN", 1 April 2014, XP054976098, discloses to store content that is transferred from a mobile phone on a tablet. US 8296728 B1 discloses methods, systems, and apparatus for mobile device interaction using a shared user interface.

US 2011/0112819 A1 discloses a system and methods for viewing a mobile screen from a mobile device on the desktop of a computer by operating a predefined pair of a mobile application program and a computer application program to provide continuous seamless integration of the processing of the data file as a pseudo-single session. When the user operates certain operations, the document opened by the mobile device application program is saved as a file, and automatically transferred from the mobile device storage file system to the computer storage file system. A pre-defined equivalent application software on the computer is launched and the copied computer file is opened on the computer screen outside or overlapping to the mobile device screen emulation window.

### SUMMARY

However, the electronic device may share only data of contents when sharing the contents using the image share function.

The electronic device according to various embodiments of the present disclosure provides attribute information of contents, together with data of the contents to be shared between electronic devices, so that not only the data of contents but also the attribute information thereof can be shared.

The invention is set out in the appended claims.

### BRIEF DESCRIPTION OF THE DRAWINGS

The present disclosure will be more apparent from the following detailed description in conjunction with the accompanying drawings, in which:
FIG. 1 illustrates a network environment including an example electronic device according to an embodiment of the present disclosure;
FIG. 2 is a block diagram illustrating a configuration of an example electronic device according to an embodiment of the present disclosure;
FIG. 3 is a flowchart illustrating an example method of processing information between electronic devices having identical OSs according to an embodiment of the present disclosure;
FIG. 4 is a diagram illustrating an example signal flow for processing information between electronic devices having identical OSs according to an embodiment of the present disclosure;
FIG. 5 illustrates an example method of processing information between electronic devices having identical OSs according to an embodiment of the present disclosure;
FIG. 6 is a diagram illustrating an example signal flow for processing information between electronic devices having identical OSs according to an embodiment of the present disclosure;
FIG. 7 illustrates an example method of processing information between electronic devices having identical OSs according to an embodiment of the present disclosure;
FIGS. 8A and 8B are flowcharts illustrating an example method of processing information between electronic devices having different OSs according to an example useful for understanding the invention;
FIG. 9 is a diagram illustrating an example signal flow for processing information between electronic devices having different OSs according to an example useful for understanding the invention;
FIGS. 10A and 10B are flowcharts illustrating an example method of processing information between electronic devices having different OSs according to an example useful for understanding the invention;
FIG. 11 is a diagram illustrating an example signal flow for processing information between electronic devices having different OSs according to an example useful for understanding the invention;
FIGS. 12A and 12B are flowcharts illustrating an example method of processing information between electronic devices having different OSs according to an example useful for understanding the invention;
FIG. 13 is a block diagram illustrating an example electronic device according to an embodiment of the present disclosure; and
FIG. 14 illustrates an example communication protocol among a plurality of electronic devices according to an embodiment of the present disclosure.

### DETAILED DESCRIPTION

Various embodiments of the present disclosure will now be described more fully in conjunction with the accompanying drawings. The present disclosure may have various embodiments, and modifications and changes may be made therein. Therefore, the present disclosure will be described in detail with reference to particular embodiments shown in the accompanying drawings. However, it should be understood that there is no intent to limit various embodiments of the present disclosure to the particular embodiments disclosed, but the present disclosure should be construed to cover all modifications, equivalents, and alternatives of the various embodiments of disclosure. In connection with descriptions of the drawings, similar components are designated by the same reference numeral.

It will be understood that the expressions "comprises" and "may comprise" is used to specify presence of disclosed function, operation, component, etc. but do not preclude the presence of one or more functions, operations, components, etc. It will be further understood that the terms "comprises" and/or "has" when used in this specification, specify the presence of stated feature, number, step, operation, component, element, or a combination thereof but do not preclude the presence or addition of one or more other features, numbers, steps, operations, components, elements, or combinations thereof. In the present disclosure, the expression "and/or" is taken as specific disclosure of each and any combination of enumerated things. For example, A and/or B is to be taken as specific disclosure of each of A, B, and A and B.

As used herein, terms such as "first," "second," etc. are used to describe various components, however, it is obvious that the components should not be defined by these terms. For example, the terms do not restrict the order and/or importance of the corresponding components. The terms are used only for distinguishing one component from another component. For example, a first component may be referred to as a second component and likewise, a second component may also be referred to as a first component, without departing from the teaching of the inventive concept.

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present.

The terminology used herein is for the purpose of describing particular embodiments only and is not intended to be limiting of the disclosure. As used herein, the singular forms "a", "an" and "the" are intended to include the plural forms as well, unless the context clearly indicates otherwise.

Unless otherwise defined herein, all terms including technical or scientific terms used herein have the same meanings as commonly understood by those skilled in the art to which the present disclosure belongs. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

An electronic device according to various embodiments of the present disclosure may be an apparatus including a gesture recognition function. According to various embodiments of the present disclosure, the electronic device may include devices having an operation support function. Examples of the electronic device may include smartphone, table Personal Computer (PC), mobile phone, video phone, electronic book (e-book) reader, desktop PC, laptop PC, netbook computer, Personal Digital Assistant (PDA), Portable Multimedia Player (PMP), MP3 player, mobile medical appliance, camera, wearable device (e.g. head-mounted device (HMD) such as electronic glasses, electronic clothing, electronic bracelet, electronic necklace, electronic appcessory, electronic tattoo, smartwatch, etc.

According to an embodiment, the electronic device may be one of smart home appliances having operation support function. Examples of the smart electronic appliance as an electronic device may include television, Digital Video Disk (DVD) player, audio player, refrigerator, air-conditioner, vacuum cleaner, electronic oven, microwave oven, laundry machine, air cleaner, set-to box, TV box (e.g. Samsung HomeSync™, apple TV™, and google TV™), game console, electronic dictionary, electronic key, camcorder, and electronic frame, etc.

According to an embodiment, examples of the electronic device may include medical device (e.g. Magnetic Resonance Angiography (MRA), Magnetic Resonance Imaging (MRI), Computed Tomography (CT)), Navigation device, Global Positioning System (GPS) receiver, Event Data Recorder (EDR), Flight Data Recorder (FDR), car infotainment device, maritime electronic device (e.g. maritime navigation device and gyro compass), aviation electronic device (avionics), security device, vehicle head unit , industrial or home robot, Automatic Teller's Machine (ATM) of financial institution, Point Of Sales (POS), etc.

According to an embodiment, examples of the electronic device may include furniture and building/structure having a communication function, electronic board, electronic signature receiving device, projector, and metering device (e.g. water, electric, gas, and electric wave metering devices). According to various embodiments, the electronic device may be any combination of the aforementioned devices. According to various embodiments of the present disclosure, the electronic device may be a flexible device. It is obvious to those skilled in the art that the electronic device is not limited to the aforementioned devices.

In various embodiments of the present disclosure, an "electronic device search mode" corresponds to a mode which searches for an external electronic device connected to an electronic device through a wired/wireless communication (e.g., near field communication, an USB scheme) by executing an application (e.g., sidesync) which has been installed in the electronic device. In various embodiments of the present disclosure, the electronic device is defined as an electronic device which displays screen data generated based on screen data of external electronic devices connected to the electronic device through the wired/wireless communication. The electronic device may display and control screens of the external electronic devices connected to electronic device with the wired/wireless communication.

Further, in various embodiments of the present disclosure, "contents" may include various data, such as an application (e.g., an application execution icon), a web page bookmark icon, a folder, a file and an image, a video, an MP3, a multimedia, a message, an e-mail, a document program file, or the like, which are manufactured or generated by a user or received from a network.

Further, in various embodiments of the present disclosure, "attribute information" may include icons, thumbnails, list items, menu items, text items, link items, information classified for each item or by a user configuration, a name of the application, a valid period, a supported OS, an installation address (URL), or the like which configure an icon execution screen when an application (e.g., an application of music, a video, a document, an e-book, the Internet, a map or a memo) is executed. When a gesture which shares the contents is generated in various embodiments of the present disclosure, data and attribute information of the contents can be shared.

Further, in various embodiments of the present disclosure, "compatible contents" may refer to contents which are compatible without installing an additional program between the electronic devices having different OSs. When the compatible contents are shared, they can be displayed in a widget form without classifying OSs. Herein, the compatible contents may include web based contents of, for example, clock contents, weather contents, or the like.

In various embodiments of the present disclosure, contents may be shared between electronic devices having identical OSs or between electronic devices having different OSs. Specifically, when a gesture for sharing the contents between the electronic devices having identical OSs is generated, data and attribute information of the content are transmitted, thereby sharing the data and the attribute information. In addition, when a gesture for sharing the contents between the electronic devices having different OSs is generated, a function of displaying or storing (i.e., backup) the contents in a widget form may be performed according to whether the contents are the compatible contents.

For example, the following description is based on an assumption that a PC is in a state where the PC shares a screen of an external electronic device (e.g., a second electronic device) connected to the PC (e.g., an electronic device) and then displays the screen of the external electronic device in the PC. In this event, OS of the PC may be different from OS of the external electronic device. That is, when an application is shared between the electronic devices having different OSs, an operation of displaying the application using a backup function or a widget may be performed according to whether the application is the compatible application. When a content shared between the electronic devices having different OSs is the compatible application, the application may be displayed in a widget form. Meanwhile, when a content shared between the electronic devices having different OSs is not the compatible application, an operation of storing data and attribute information of the application may be performed. That is, a function of backing up the application may be performed. When the function of backing up is performed, data and attribute information of the application may be stored.

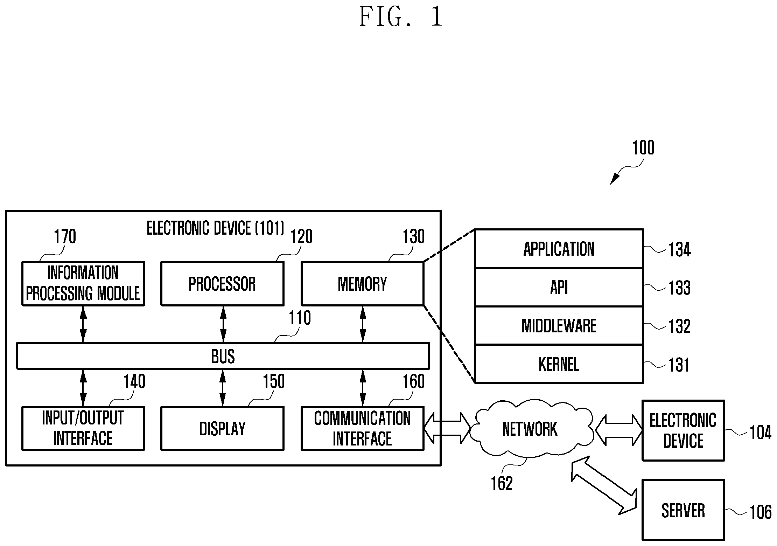

FIG. 1 is a diagram illustrating a network environment including electronic devices. Referring to FIG 1, the electronic device 101 may include a bus 110, a processor 120, a memory 130, an input/output interface 140, a display 150, a communication interface 160, and an information processing module 170.

The bus 110 connects the aforementioned components to each other and may be a circuit of exchanging signals (e.g. control messages) among the components.

For example, the processor 120 receives a command from any of the aforementioned components (e.g. memory 130, input/output interface 140, display 150, communication interface 160, and information processing module 170) through the bus 110, interprets the command, and executes operation or data processing according to the decrypted command.

The memory 130 may store the command or data received from the processor 120 or other components (e.g. input/output interface 140, display 150, communication interface 160, information processing module 170, etc.) or generated by the processor 120 or other components. The memory 130 may store program modules including kernel 131, middleware 132, Application Programming Interface (API) 133, applications 134, etc. Each programing module may be implemented as software, firmware, hardware, and any combination thereof.

The kernel 131 may control or manage the system resources (e.g. bus 110, processor 120, and memory 130) for use in executing the operation or function implemented with the middleware 132, the API 133, or the application 134. The kernel 131 also may provide an interface allowing the middleware 132, API 133, or application 134 to access the components of the electronic device 101 to control or manage.

The middleware 132 may work as a relay of data communicated between the API 133 or application 134 and the kernel 131. The middleware 132 may execute control of the task requests from the applications 134 in such a way of assigning priority for use of the system resource (e.g. bus 110, processor 120, and memory 130) of the electronic device to at least one of the applications 134.

The API 133 is the interface for the applications 134 to control the function provided by the kernel 131 or the middleware 132 and may include at least one interface or function (e.g. command) for file control, window control, image control, or text control.

According to various embodiments, the applications 134 may include Short Messaging Service/Multimedia Messaging Service (SMS/MMS) application, email application, calendar application, alarm application, health care application (e.g. application of measuring quantity of motion or blood sugar level), and environmental information application (e.g. atmospheric pressure, humidity, and temperature applications). Additionally or alternatively, the application 134 may be an application related to information exchange between the electronic device 101 and other external electronic device (e.g. electronic device 104). Examples of the information exchange application may include a notification relay application for relaying specific information to the external electronic device and a device management application for managing the external electronic device.

For example, the notification relay application may be provided with a function of relaying the alarm information generated by the other applications (e.g. SMS/MMS application, email application, health care application, and environmental information application) of the electronic device 101 to an external electronic device (e.g. electronic device 104). Additionally or alternatively, the notification relay application may provide the user with the notification information received from an external electronic device (e.g. electronic device 104). The electronic device application may manage (e.g. install, delete, and update) the function of an external electronic device (e.g. turn-on/off of the electronic device 104 itself (or a part of it) or adjustment of the brightness (or resolution) of the display) which communicates with the electronic device 101 or the service (e.g. communication or messaging service) provided by the external electronic device or an application running on the external device.

According to various embodiments, the applications 134 may include an application designated according to the property (e.g. type) of an external electronic device (electronic device 104). If the external electronic device is the MP3 player, the applications 134 may include a music playback application. Similarly, if the external electronic device is a mobile medical appliance, the applications 134 may include a heal care application. According to an embodiment, the application 134 may include at least one of applications designated to the electronic device 101 or the applications received from the external electronic device (e.g. server 106 and electronic device 104).

The input/output interface 140 delivers the command or data input by the user through with an input/output device (e.g. sensor, keyboard, and touchscreen) to the processor 120, memory 130, communication interface 160, and/or information processing module 170 through the bus 110. For example, the input/output interface 140 may provide the processor 120 with the data corresponding to the touch may by the user on the touchscreen. The input/output interface 140 may output the command or data (which is received from the processor 120, memory 130, communication interfaced 160, or the information processing module 170 through the bus 110) through the input/output device (e.g. speaker and display). For example, the input/out interface 140 may output the voice data processed by the processor 120 to the user through the speaker.

The display 150 may present various information (e.g. multimedia data and text data) to the user.

The communication interface 160 may establish a communication connection of the electronic device 101 with an external device (e.g. electronic device 104 and server 106). For example, the communication interface 160 connects to the network 162 through a wireless or wired link for communication with the external device. Examples of the wireless communication technology may include wireless fidelity (Wi-Fi), Bluetooth (BT), Near Field Communication (NFC), Global Positioning System (GPS), and cellular communication technology (e.g. Long Term Evolution (LTE), LTE-Advanced (LTE-A), Code Division Multiple Access (CDMA), Wideband CDMA (WCDMA), Universal Mobile Telecommunication System (UMTS), Wireless-Broadband (WiBro), and General System for Mobile communications (GSM)). Examples of the wired communication technology may include Universal Serial Bus (USB), High Definition Multimedia Interface (HDMI), Recommended Standard 232 (RS-232), and Plain Old Telephone Service (POTS).

According to an embodiment, the network 162 may be a telecommunication network. The communication network may include at least one of computer network, Internet, Internet of Things, or telephone network. According to an embodiment, the communication protocol between the electronic device 101 and an external device (e.g. transport layer protocol, data link layer protocol, and physical layer protocol) may be supported by at least one of the applications 134, API 133, middleware 132, kernel 131, or communication interface 160.

The server 106 may support driving of the electronic device 101 by performing at least one of operations (or functions) implemented by the electronic device 101. For example, the server 106 may include a gesture recognition server module 108 that may support an information processing module 170 realized in the electronic device 101. For example, the gesture recognition server module 108 may include at least one element of the information processing module 170 to perform (for example, handle) at least one of the operations performed by the information processing module 170.

The information processing module 170 may process at least some pieces of information acquired from other elements (for example, a processor 120, a memory 130, an input/output interface 140, and a communication interface 160), and may provide the processed information to a user through various methods. For example, the information processing module 170 may control at least some functions of the electronic device 101 such that the electronic device 101 interworks with another electronic device (for example, an electronic device 104 or a server 106) using the processor 120 or independently from the processor 120.

According to an embodiment, at least a part of functions performed by an electronic device 101 (e.g., an information processing module 170) may be performed by an external device (e.g., a server 106). For example, the server 106 may include an information processing server module corresponding to the information processing module 170, process at least a part of functions related to information processing using the information process server module, and then transmit the processed function to the electronic device 101 (e.g., the information processing module 170).

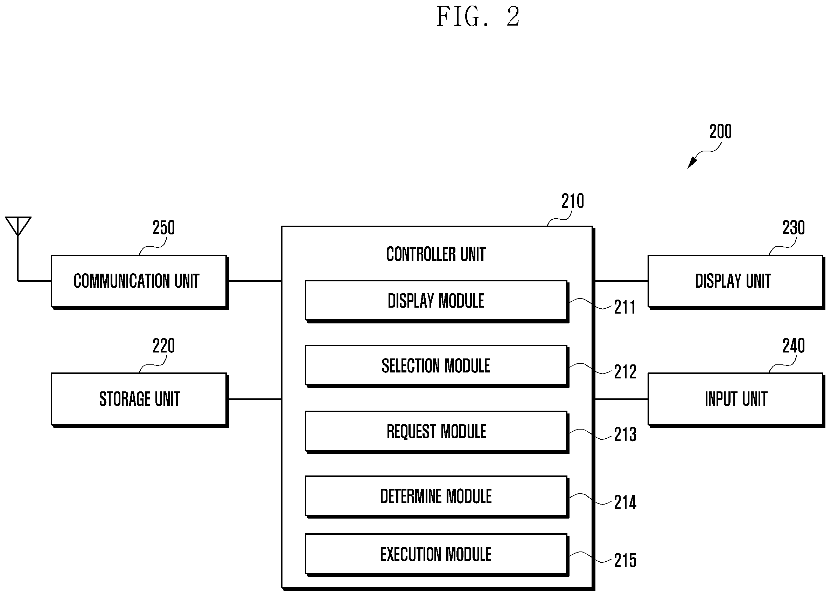

FIG. 2 is a block diagram illustrating a configuration of an electronic device 200 (e.g., the electronic device 101) for processing information according to an embodiment. The electronic device 200 may include a controller 210, a storage unit 220, a display unit 230, an input unit 240, and a communication unit 250.

Referring to FIG. 2, the controller 210 may be a processor (e.g., an application processor (API)) or a hardware module, a software module, or a combination thereof, which is controlled by the processor. According to an embodiment, for example, the controller 210 may include a control logic corresponding to at least a part of a function of the information processing module 170 executed by the processor 120. The information processing module 170 of the controller 210 may include a display module 211 for processing information, a selection module 212, a request module 213, a determination module 214, and an execution module 215.

When a connection of an external electronic device connected to the electronic device is detected by performing an electronic search mode, the controller 210 may display a screen of the external electronic device in the electronic device. The electronic device and the external electronic device may have identical OSs or different OSs. When a gesture for sharing the contents between the electronic devices having identical OSs is generated, the controller 210 may share data and attribute information of the content. Further, when a gesture for sharing the contents between the electronic devices having different OSs is generated, the controller 210 may perform a corresponding operation according to whether the contents are compatible contents. Specifically, when the contents are the compatible contents, the controller 210 may display the contents in a widget form. Meanwhile, when the contents are not the compatible contents, the controller 210 may perform an operation of storing (i.e., backing up) the data and the attribute information of the contents.

Referring to a module operation of the controller 210, the display module 211 may display at least a part of data displayed on the screen of the external electronic device functionally connected to the electronic device. The selection module 212 may select contents to be shared among the contents displayed on the screen of the electronic device. When an operation of sharing contents selected through the selection module 212 is generated, the request module 213 may request data and attribute information of the contents. The determination module 214 may determine a state of an electronic device related to the contents. The execution module 215 may perform an operation of executing a function or contents corresponding to the selected contents based on the state of the electronic device.

When a gesture for sharing the contents between the electronic devices having different OSs is generated, the storage unit 220 may store data and attribute information of the content.

The input unit 240 may include, for example, an input device (for example, the input/output interface 140) such as a touch panel and a key button panel. Further, the touch panel may be configured by a touch screen which is integrated with the display unit 230, and may detect touched inputs in the display unit 230.

An electronic device according to an embodiment of the present disclosure may include the display unit 230 which displays at least a part of data displayed on a screen of an external electronic device functionally connected to the electronic device on a screen of the electronic device and the controller 210 which displays at least a part of data displayed on the screen of the external electronic device functionally connected to the electronic device, selects contents to be shared among contents displayed on the screen of the electronic device based on a first input with respect to the screen of the electronic device, requests information related to the selected contents in response to a second input related to the electronic device to the external electronic device, determines a state of the electronic device related to the selected contents based on the information received in response to the request, and then makes a control to execute functions or contents corresponding to the selected contents.

The controller 210 may determine the state of the electronic device through at least one among whether the functions or the contents are installed in the electronic device, whether the functions or the contents are being executed, and whether the OS of the electronic device supports the functions or the contents.

When the OS of the electronic device supports the functions or the contents, the controller 210 may control the display unit 230 to display information related to the contents in a widget form and when the OS of the electronic device does not support the functions or the contents, the controller 210 may store the information related to the contents.

The controller 210 may request information related to contents including at least one between data of the contents and attribute information on the contents to the external electronic device.

The controller 210 may display contents which an OS including at least one between the clock contents and the weather contents supports as web based contents in a widget form.

When the contents are installed in the electronic device, the controller 210 may control information related to the contents to be transmitted and when the contents are not installed in the electronic device, the controller 210 may make a control to receive information for installing the contents to install and then install the contents.

The controller 210 may share, with the external electronic device, contents including at least one among various data, such as an application (e.g., application execution icon), a web page bookmark icon, a folder, a file and an image, a video, an MP3, a multimedia, a message, an e-mail, a document program file, or the like, which are manufactured or generated by a user or received from a network.

The controller 210 may request attribute information on the contents including at least one among icons, a thumbnail, list items, menu items, text items, link items, information classified for each item or by a user configuration, a name, a valid period, a supported OS, or an installation address (URL) which configure an icon execution screen.

The controller 210 may select contents to be shared based on the first input and the second input including at least one between user gaze information or a drag and drop gesture, and request information related to the selected contents to the external electronic device.

In various embodiment of the present disclosure, the controller 210 may acquire the user gaze information by a camera. For example, the controller 210 may acquire the user gaze position information and select contents to be shared based on the user gaze position information. The controller 210 may detect the user gaze position information moves to an area generated based on screen data of the connected external electronic device. In response to the detect the user gaze position information move, the controller 210 may request information related to the selected contents to the external electronic device.

The electronic device according to the embodiment of the present disclosure may include the controller 210 which makes a control to transfer at least a part of contents displayed on a screen of the electronic device to a functionally connected second electronic device, receives an information request related to the transferred contents from the second electronic device, and transmits information related to the contents to the second electronic device in response to the received request.

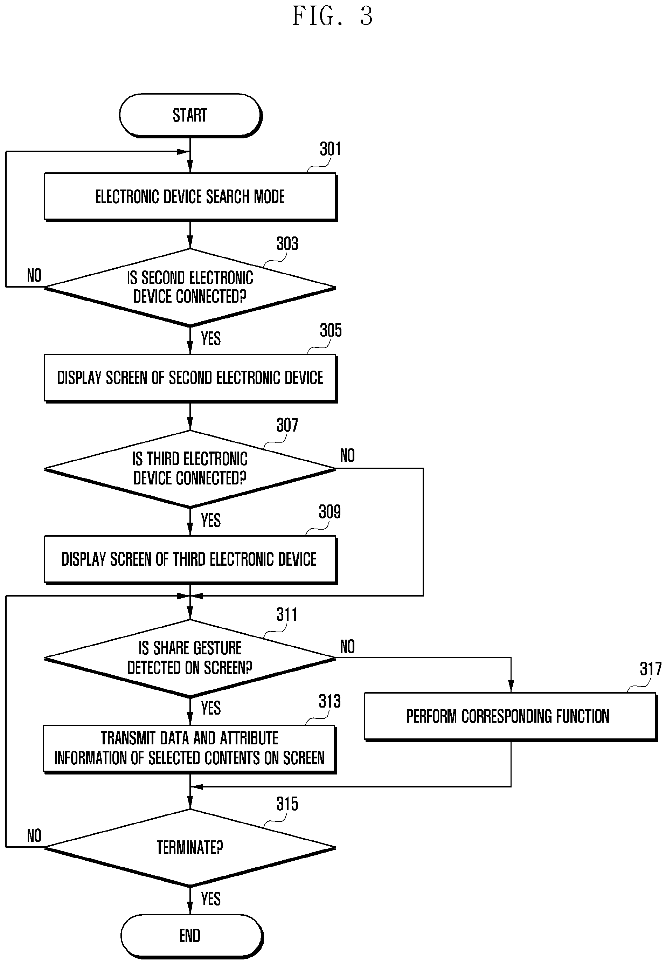

FIG. 3 is a flowchart illustrating an example method of processing information between electronic devices having identical OSs according to an embodiment of the present disclosure.

In various embodiments of the present disclosure, referring to FIG. 3, the controller 210 may perform an electronic device search mode in operation 301. Herein, the electronic device search mode corresponds to a mode of searching for other electronic devices (e.g., at least one external electronic device) connected to the electronic device 100 through a wired/wireless communication, such as near field communication, Wi-Fi, Bluetooth or Wi-Fi Direct, an Universal Serial Bus ("USB") scheme, or the like. Through the electronic device search mode, the controller 210 may display a list of one or more external electronic devices connected to the electronic device 100. When a device is selected from among the external electronic devices included in the list, the controller 210 execute communicative connection to the selected device. When executing connection to one or more external electronic devices, the controller 210 may display screens of the connected external electronic devices, and may transmit and receive content information (e.g., data and attribute information) between the electronic device and the external electronic device in the displayed screen. That is, sharing contents between the electronic device and the external electronic device in the displayed screen may be performed or executed. Hereinafter, the following description is based on an assumption that the electronic device 100 according to various embodiments of the present disclosure is connected to one or more external electronic devices with a short range communication scheme, such as near field communication or Wi-Fi, and thus shares the contents.

When the second electronic device 200 has been discovered or detected through the electronic device search mode, the controller 210 may determine whether the controller is connected to the second electronic device 200 in operation 303. When a connection exists to the second electronic device 200, the controller 210 may control the display unit 230 to display at least a part of screen data of the second electronic device 200 in the electronic device 100 in operation 305. The controller 210 may determine whether the controller is connected to a third electronic device 300 in operation 307. When a connection exists to the third electronic device 300, the controller 210 may control the display unit 230 to display at least a part of screen data of the third electronic device 300 in the electronic device 100 in operation 309. Although it has been assumed that the second electronic device 200 and the third electronic device 300, which are external electronic devices connected to the electronic device 100, are sequentially connected, but this is not limited thereto and the second electronic device 200 and the third electronic device 300 may be simultaneously connected.

For example, a screen of the electronic device 100 may display screen data generated based on at least a part of screen data of the second electronic device 200, and screen data generated based on at least a part of screen data of the third electronic device 300 together. For another example, when the third electronic device 300 is not connected in operation 307, the screen of the electronic device 100 may display the screen data generated based on the screen data of the second electronic device 200. For another example, screen data generated from one or more external electronic devices (e.g., the second electronic device 200, the third electronic device 300) may be displayed on at least one side of the screen of the electronic device 100.

In operation 311, the controller 210 may determine whether a gesture to share contents is detected (e.g., to share the contents displayed in the screen data generated based on at least a part of the screen data of the second electronic device 200, and/or the contents based on the screen data generated based on at least a part of the screen data of the third electronic device 300). Herein, the contents may include various data, such as an application (e.g., an application execution icon), a web page bookmark icon, a folder, a file and an image, a video, an MP3, a multimedia, a message, an e-mail, a document program file, or the like, which are manufactured or generated by a user or received from a network.

Although it has been assumed that the share gesture is described generally herein as a drag and drop gesture, it is understood that the share gesture is not limited thereto and the may include user gaze information, a proximity input (e.g., hovering touch input), other touch gestures, and other forms of inputs, or the like. For example, the controller 210 may detect an operation of selecting contents desired to be shared among contents displayed on a screen and then dragging the contents to an area generated based on screen data of the connected external electronic device. That is, when the content is dragged to an area generated based on screen data of an electronic device to be shared with in a state of being selected, the contents may be shared in the electronic device in which the drag is performed. In this event, when the contents exist in the electronic device in which the drag is performed, data and attribute information of the contents may be shared. For example, when the shared contents are gallery or image-related applications, at least a part of data (e.g., image file) or attribute information related to the application may be shared. When the gallery application has been shared, a recently photographed image may be transmitted. For another example, when the shared contents are media player related applications, at least a part of data (e.g., a multimedia file) or attribute information (e.g., continuous-play information, bookmark information) which is related to the applications may be shared.

According to various embodiments, when the contents do not exist in the dragged electronic device, the contents are installed in the electronic device and then an operation of sharing data and attribute information of the contents may be performed. For example, even though sharing gallery application contents of the screen data of the electronic device 100 are sent in an area of screen data of the second electronic device 200, when a gallery application does not exist in the second electronic device 200, the second electronic device 200 may attempt an installation of the gallery application software by receiving information for installing the gallery application from the electronic device or an external electronic device (e.g., a server storing the gallery application software).

According to various embodiments, when the share gesture is generated in operation 311, the controller 210 may transmit data and attribute information of selected contents to the indicated electronic device in operation 313. Meanwhile, when the share gesture is not generated or detected in operation 311, the controller 210 may perform a corresponding function in operation 317. The controller 210 may determine whether a termination command is generated in operation 315. When the termination command is generated, the controller 210 may terminate both a connection to the external electronic device and a display of screen data generated based on at least a part of the screen data of the external electronic device. Meanwhile, when the termination command is not generated, the controller 210 may proceed to operation 311.

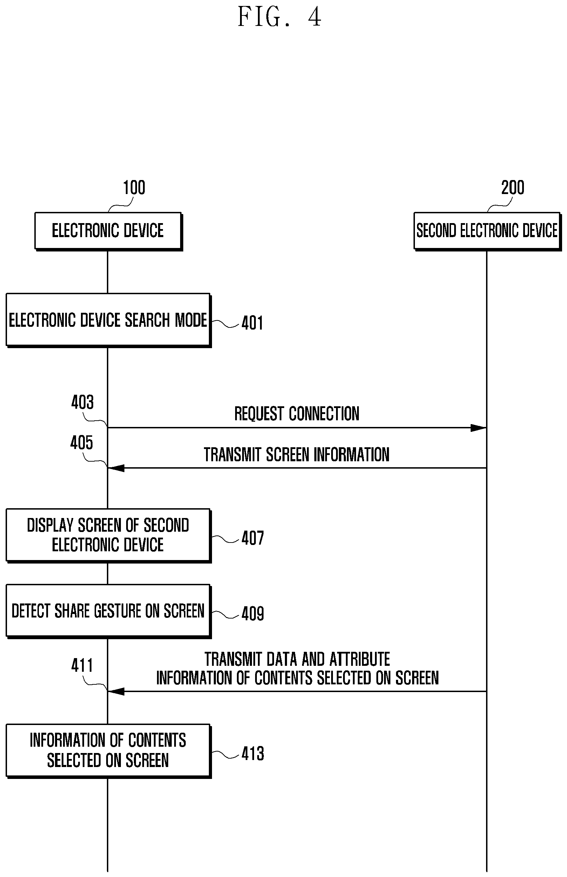

FIG. 4 is a diagram illustrating an example signal flow for processing information between electronic devices having identical OSs according to an embodiment.

In FIG. 4, the following description is based on an example in which contents are shared with a second electronic device 200 functionally connected to an electronic device 100.

In various embodiments of the present disclosure, referring to FIG. 4, the electronic device 100 may perform an electronic device search mode in operation 401. Through the electronic device search mode, the electronic device 100 may display a list of one or more external electronic devices connected to the electronic device 100. In the embodiment of the present disclosure, it is assumed that the second electronic device 200 is included in the list, and the electronic device 100 selects the second electronic device 200 included in the list of the electronic devices, thereby making a request for a connection to the second electronic device 200 in operation 403. In response to the connection request, the second electronic device 200 may transmit screen data generated based on at least a part of screen data of the second electronic device 200 to the electronic device 100 in operation 405. The electronic device 100 may display the screen data generated based on at least a part of the received screen data of the second electronic device 200 in operation 407. The electronic device 100 may detect a share gesture, the share gesture selecting contents desired to be shared from among various contents displayed in a screen area of the second electronic device 200, and then transmits or sends the selected sharing contents to another area of the electronic device in operation 409. When the share gesture is generated, the electronic device 100 may request data and attribute information of the selected contents from the second electronic device 200. In response to the request, the second electronic device 200 may transmit the data and attribute information of contents corresponding to the electronic device 100 in operation 411. The electronic device 100 may receive the data and attribute information of the contents from the second electronic device 200 in operation 413.

As the operation of sharing the data and attribute information of the contents is performed, the contents of the electronic device 100 and the contents of the second electronic device 200 may result in having some identical data and attribute information. Further, when the received contents are executed in the electronic device 100, data may be displayed in the same manner as that of the second electronic device 200, according to the attribute information.

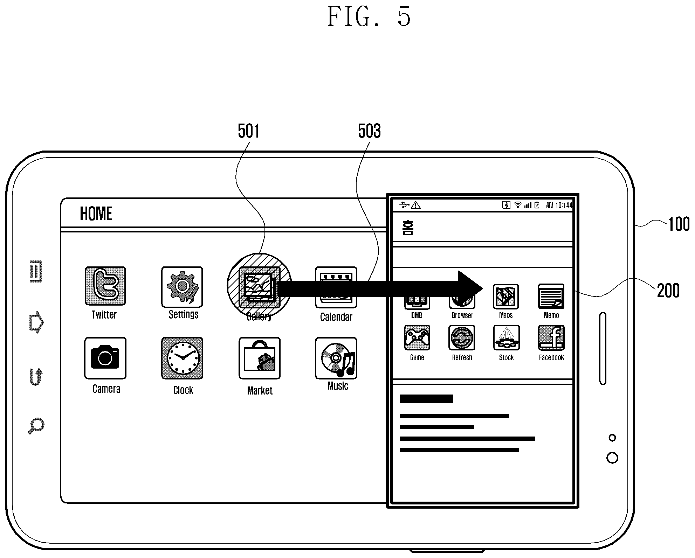

FIG. 5 illustrates an example method of processing information between electronic devices having identical OSs according to an embodiment of the present disclosure.

FIG. 5 illustrates a state in which a second electronic device 200 is connected to an electronic device 100 and then screen data generated based on at least a part of screen data of the second electronic device 200 is displayed on a screen of the electronic device 100. The following description shows a gesture that when executed within a state in which contents to be shared is selected from among contents displayed in the electronic device 100, causes, triggers or otherwise activates display and generation of the shared contents in a screen area of the second electronic device 200.

Referring to FIG. 5, the electronic device 100 may display screen data generated based on at least a part of screen data of the second electronic device 200. When a share gesture (that is to be shared with the second electronic device 200) is generated in a state where contents displayed on a screen area of the electronic device 100 are selected, data and attribute information of the selected contents in the electronic device 100 are transmitted to the second electronic device 200, having identical data and attribute information. For example, when a drag gesture is generated (as indicated by reference numeral 503) moving to the second electronic device 200 and selecting a gallery application 501 included in a tablet (e.g., the electronic device 100), pictures and attribute information of and/or within the gallery application 501 are transmitted to the second electronic device 200. Accordingly, a gallery of the electronic device 100 and a gallery of the electronic device 200 may result in having at least some identical pictures and attribute information.

For another example, an alarm application of the electronic device 100 may be shared with the second electronic device 200. When a share gesture is generated indicated sharing of the alarm application with the second electronic device 200 within a state where the alarm application of the electronic device 100 is selected, alarm setting information configured in the electronic device 100 may be transmitted to the second electronic device 200, which may have, as a result, identical alarm setting information.

According to various embodiments, the application may be installed in the second electronic device 200 on the basis in which an application installed in the electronic device 100 is to be transmitted to the second electronic device 200. For example, when a music playback application is installed in the electronic device 100, if a gesture (e.g., drag and drop) indicates sharing of music content of a music playback application with the second electronic device 200 is to be performed, an operation for installing the music playback application in the second electronic device 200 may be performed, such as transmission of installation information or data to the second electronic device 200, or implementing a connection attempt for installation via an external device (e.g., a server) by the electronic device 100.

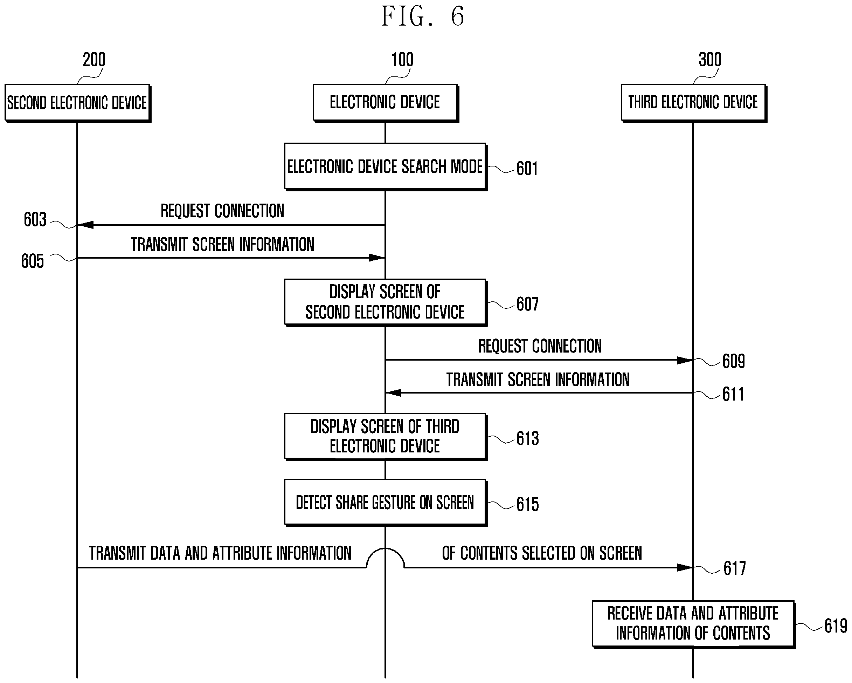

FIG. 6 is a diagram illustrating an example signal flow for processing information between electronic devices having identical OSs according to an embodiment of the present disclosure.

As illustrated in FIG. 6, a second electronic device 200 and a third electronic device 300 are connected to an electronic device 100, and screen data of the second electronic device (i.e., generated based on at least a part of screen data of the second electronic device 200) and screen data of the third electronic device (i.e., generated based on at least a part of screen data of the third electronic device 300) may be displayed together on a screen of the electronic device 100. A gesture may be detected (i.e., generated by a user input), selecting contents to be shared. This to-be-shared content may be selected from among contents displayed on a screen of the second electronic device 200. The selected content may be sent or transmitted to an area generated based on the screen data of the third electronic device 300.

In one embodiment of the present disclosure, this may be implemented as described with reference to FIG. 6. The electronic device 100 may perform an electronic device search mode in operation 601. Through the electronic device search mode, the electronic device 100 may display a list of one or more external electronic devices communicatively connected to the electronic device 100. In the embodiment of the present disclosure, it is assumed that the second electronic device 200 and the third electronic device 300 are included in the list, and the electronic device 100 selects the second electronic device 200 included in the list, thereby making (e.g., executing) a request for a connection to the second electronic device 200 in operation 603. In response to the connection request, the second electronic device 200 may transmit screen data generated based on at least a part of screen data of the second electronic device 200 to the electronic device 100 in operation 605. The electronic device 100 may display the screen data generated based on at least a part of the received screen data of the second electronic device 200 in operation 607. The electronic device 100 may makes a request for a connection to the third electronic device 300 in operation 609. In response to the connection request, the third electronic device 300 may transmit screen data generated based on at least a part of screen data of the third electronic device 300 to the electronic device 100 in operation 611. The electronic device 100 may display the screen data generated based on at least a part of the received screen data of the third electronic device 300 in operation 613. For example, the screen of the electronic device 100 may display the screen data generated based on at least a part of the screen data of the second electronic device 200 and the screen data generated based on at least a part of the screen data of the third electronic device 300 together. In operation 615, the electronic device 100 may detect a share gesture which, in a state in which contents desired to be shared among contents displayed on the screen of the second electronic device 200 are selected, displays the sharing contents in a screen area of the third electronic device 300. When the share gesture is generated, the third electronic device 300 may request data and attribute information of the selected contents to the second electronic device 200. In response to the request, in operation 617, the second electronic device 200 may transmit the data and attribute information of the selected contents to the third electronic device 300. The third electronic device 300 may receive the data and attribute information of the contents from the second electronic device 200 in operation 619.

As the operation of sharing data and attribute information for the shared contents is performed, the contents of the second electronic device 200 and the contents of the third electronic device 300 may result in having identical data and attribute information. Further, when the received contents are executed in the third electronic device 300, data identical to data of the second electronic device 200 may be displayed according to the attribute information.

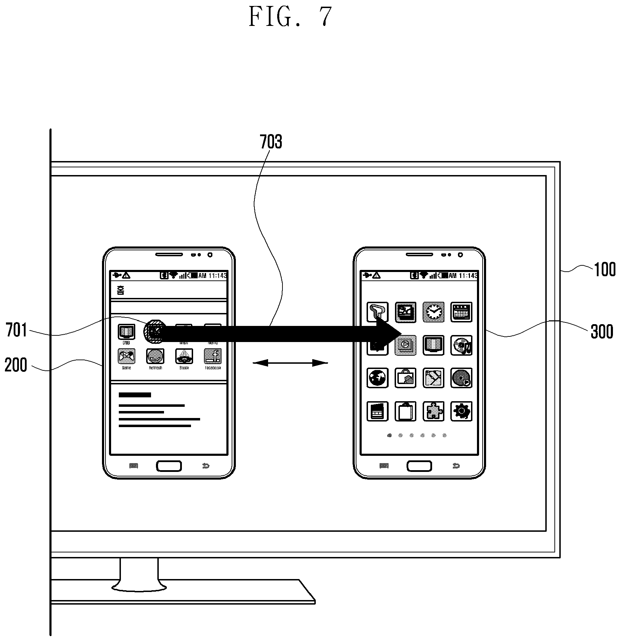

FIG. 7 illustrates a method of processing information between electronic devices having identical OSs according to an embodiment.

FIG. 7 according to various embodiments of the present disclosure illustrates a state in which a second electronic device 200 and a third electronic device 300 are connected to an electronic device 100 and then screen data generated based on at least a part of screen data of the second electronic device 200 and screen data generated based on at least a part of screen data of the third electronic device 300 are displayed together in the electronic device 100. The following description is based on an assumption that a share gesture is generated when contents desired to be shared is selected from among contents displayed in the screen area of the second electronic device 200, and the shared contents are displayed in a screen area of the third electronic device 300.

Referring to FIG. 7 according to various embodiments of the present disclosure, the electronic device 100 may, through the electronic device search, display the screen data generated based on at least a part of the screen data of the second electronic device 200 and the screen data generated based on at least a part of the screen data of the third electronic device 300, both of which may be connected to the electronic device 100. When the share gesture is generated in a state where contents displayed in the screen area of the second electronic device 200 has been selected, the contents (including data and attribute information of the content) may be shared or otherwise transmitted to the third electronic device 300.

For example, as shown in FIG. 7, when a gallery application 701 displayed on a screen of the second electronic device 200 is selected, and a drag gesture 703 is generated indicating sharing to the third electronic device 300 in a state in which the screen of the second electronic device 200 and a screen of the third electronic device 300 are displayed together in a PC (e.g., the electronic device 100), pictures and attribute information for the gallery application 701 are transmitted to the third electronic device 300 so that the second electronic device 200 and the third electronic device 300 may result in having at least a part of identical pictures and attribute information.

For another example, an alarm application of the second electronic device 200 may be shared with the third electronic device 300. When a share gesture is generated when contents displayed in the screen area of the second electronic device 200 has been selected, the contents may be shared with the third electronic device 300, including alarm setting information configured in the second electronic device 200, such that the second electronic device 200 and the third electronic device 300 may result in having at least partially identical alarm setting information.

According to various embodiments, an application may be installed in the third electronic device 300 or may be automatically installed when the application installed in the second electronic device 200 is transmitted to the third electronic device 300. For example, when a music playback application is installed in the second electronic device 200 but not in the third electronic device 300, a sharing gesture (e.g., drag and drop) sharing music contents of the music playback application with the third electronic device 300 is performed, the gesture may trigger or execute installation of the music playback application in the third electronic device 300 may be performed by, for example, transmitting installation information or data to the third electronic device 300, or executing a connection attempt to an external installation server by the second electronic device 200.

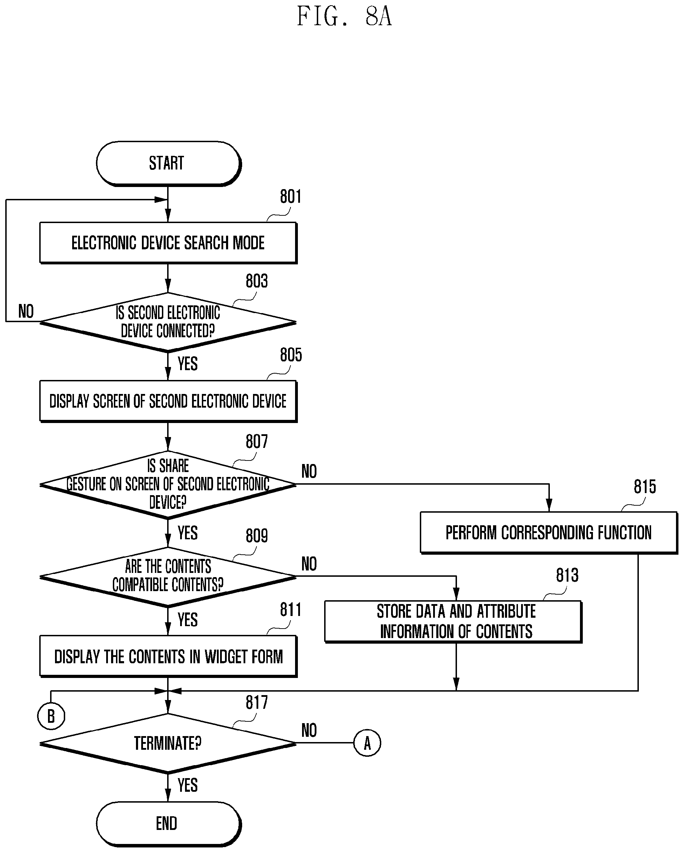

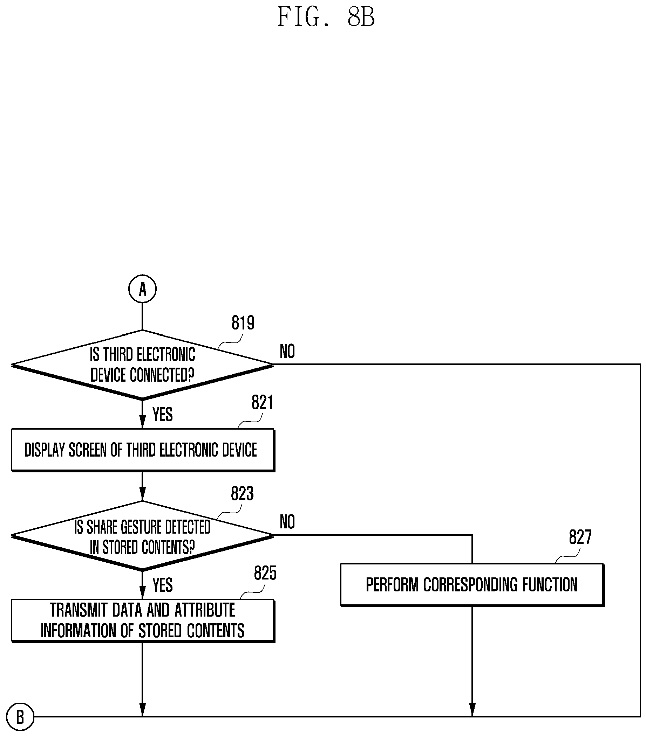

FIGS. 8A and 8B are flowcharts illustrating an example method of processing information between electronic devices having different OSs according to an example useful for understanding the invention.

The present disclosure may contemplate a variety of cases, such as the first and second electronic devices 100 and 200 have different OSs and, additionally for example, a case where an electronic device 100 has been functionally connected to a second electronic device 200 and a third electronic device 300, and further a case in which the electronic device 100, the second electronic device 200, and the third electronic device 300 all have different OSs, a case in which the second electronic device 200 and the third electronic device 300 have identical OSs and the electronic device 100 has a different OS, and a case in which the electronic device 100 and the second electronic device 200 (or, the third electronic device 300) have identical OSs and the third electronic device 300 (or, the second electronic device 200) has a different OS.

Referring to FIGS. 8A and 8B, the controller 210 may perform an electronic device search mode in operation 801. Herein, the electronic device search mode searches for at least one external electronic device connected to the electronic device 100 through wired/wireless communication, including, for example, near field communication, Wi-Fi, Bluetooth or Wi-Fi Direct, an Universal Serial Bus (USB) scheme, or the like. The electronic device 100 may display connected screens of one or more electronic devices and may transmit and receive contents information (e.g., data and attribute information of contents) between the electronic devices on the displayed screen. That is, an operation sharing contents between the electronic devices in the displayed screen may be controlled. Hereinafter, it is assumed that the electronic device 100 is connected to one or more external electronic devices using short range wireless communication, such as near field communication or Wi-Fi to share the contents.

Through the electronic device search mode, the controller 210 may determine whether the controller is connected to the second electronic device 200 in operation 803. When the controller is connected to the second electronic device 200, the controller 210 may control the display unit 230 to display at least a part of screen data of the second electronic device 200 in the electronic device 100 in operation 805.

For example, a screen of the electronic device 100 may display screen data generated based on at least a part of screen data of the second electronic device 200. In another example, screen data generated from one or more external electronic devices (e.g., the second electronic device 200) may be displayed on at least one side of the screen of the electronic device 100.

The controller 210 may determine whether a share gesture, which shares contents displayed in an area of the screen data of the second electronic device 200, is detected in operation 807. Herein, the contents may include various data, such as an application (e.g., application execution icon), a web page bookmark icon, a folder, a file and an image, a video, an MP3, a multimedia, a message, an e-mail, a document program file, or the like, which are manufactured or generated by a user or received from a network. Although the following description is based on an example in which the share gesture is a drag and drop gesture, the disclosure is not limited thereto and the share gesture may include other gestures or inputs, such as user gaze information, a proximity input (e.g., hover inputs), or the like. For example, the controller 210 may perform an operation of selecting contents desired to be shared among contents displayed in the second electronic device 200 and then dragging the contents to the electronic device 100 to share the contents. In various embodiments of the present disclosure, when a gesture which shares contents between electronic devices having different OSs is generated, the controller 210 may perform an operation of sharing corresponding contents according to whether the contents are compatible contents.

When the share gesture has been detected, the controller 210 may determine whether the contents are compatible contents in operation 809. When the contents are the compatible contents, the electronic device, through the controller 210, may request data and attribute information of the selected contents to the second electronic device 200. In response to the request, the controller 210 may control the display unit 230 to display the contents in, for example, a widget form in operation 811. Herein, the contents displayable in the widget form may include weather contents, clock contents, or the like.

Meanwhile, when the contents are not the compatible contents, the controller 210 may store data and attribute information of the contents in operation 813. That is, back up function for the contents may be executed or performed. When backing up the contents is executed or performed, data and attribute information of the contents may be stored.

When the share gesture has not been detected in operation 807, the controller 210 may perform a corresponding function in operation 815. The controller 210 may determine whether a termination command is generated in operation 817. When the termination command is generated, the controller 210 may terminate a connection to the connected external electronic device and terminate a display of screen data generated based on at least a part of the screen data of the external electronic device.

When the termination command is not generated, the controller 210 may determine whether the controller is connected to the third electronic device 300 in operation 819. When the controller is connected to the third electronic device 300, the controller 210 may control the display unit 230 to display screen data generated based on at least a part of screen data of the third electronic device 300 in operation 821. Further, the controller 210 may determine whether the share gesture, which, in a state where the contents stored in operation 813 are selected, displays the contents in a screen area of the third electronic device, is detected in operation 823.

When the share gesture has been detected, the controller 210 may transmit data and attribute information of the stored contents in operation 825. Meanwhile, when the share gesture has not been detected in operation 823, the controller 210 may execute or perform a corresponding function in operation 827 and continue to operation 817 to determine whether a termination command is generated.

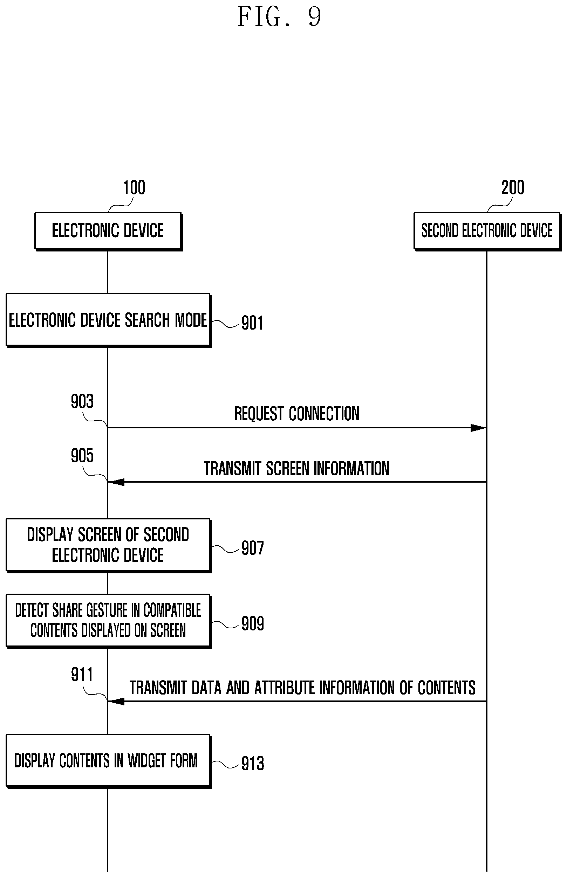

FIG. 9 is a diagram illustrating an example signal flow for processing information between electronic devices having different OSs according to an example useful for understanding the invention.

In FIG. 9, it is assumed that an electronic device 100 and a second electronic device 200 have different OSs and a screen generated based on at least a part of screen data of the second electronic device 200 is displayed on a screen of the electronic device 100.

Referring to FIG. 9 according to various embodiments of the present disclosure, the electronic device 100 may perform an electronic device search mode in operation 901. Through the electronic device search, the electronic device 100 may request a connection to the second electronic device 200 in operation 903. In response to the connection request, the second electronic device 200 may transmit screen data generated based on at least a part of screen data of the second electronic device 200 to the electronic device 100 in operation 905. The electronic device 100 may display screen data generated based on at least a part of the received screen data of the second electronic device 200 in operation 907. In operation 909, the electronic device 100 may select compatible contents displayed in an area of a screen of the second electronic device 200 and then detect a drag gesture (i.e., a share gesture) to a screen of the electronic device 100. As the drag gesture is detected, the second electronic device 200 may transmit data and attribute information of contents to the electronic device 100 in operation 911. In operation 913, the electronic device 100 may receive the data and attribute information of the contents. As an operation of sharing the data and attribute information of the contents is performed, the contents of the electronic device 100 and the contents of the second electronic device 200 may have at least a part of identical data and attribute information.

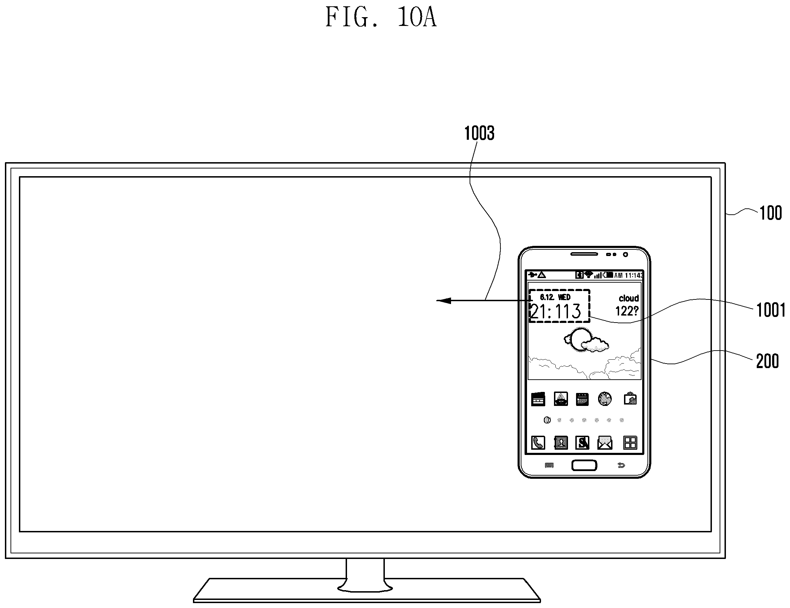

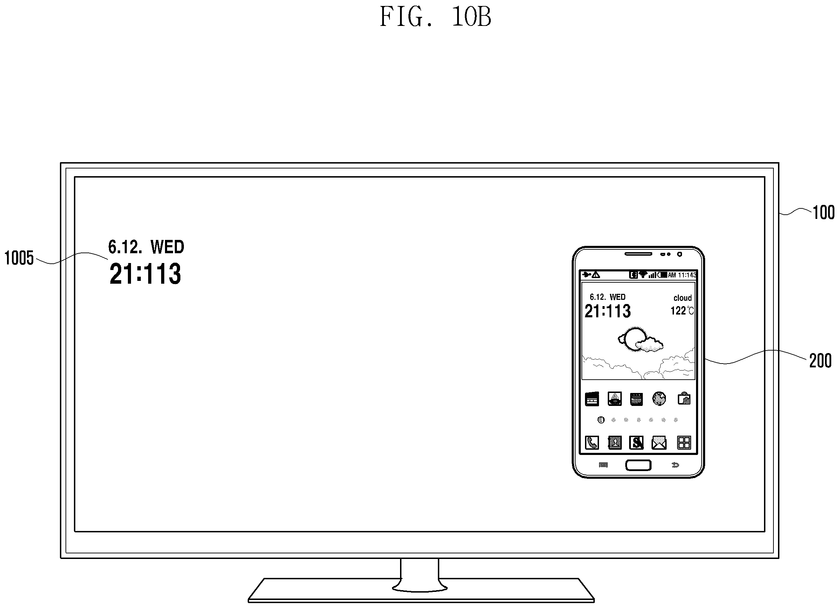

FIGS. 10A and 10B are flowcharts illustrating an example method of processing information between electronic devices having different OSs according to an example useful for understanding the invention.

FIGS. 10A and 10B illustrate a state in which an electronic device 100 and a second electronic device 200 have different OSs. The following description is based on an example in which compatible contents displayed on a screen area of a second electronic device is shared with an electronic device 100 in a state where a screen generated based on at least a part of screen data of the second electronic device 200 is displayed on a screen of the electronic device 100.

Referring to FIGS. 10A and 10B, the electronic device 100 (e.g., a PC) may display a screen of the second electronic device 200 connected the electronic device 100, as shown in FIG. 10A. In the embodiment of the present disclosure, it is assumed that a full screen of the second electronic device 200 is displayed, but this is not limited thereto and screen data may be displayed generated from a part or portion of the screen data of the second electronic device 200. When a drag gesture to a screen of the PC is generated, as indicated by reference numeral 1003, in a state where clock contents 1001 (i.e., compatible contents) is selected and displayed in the screen area of the second electronic device 200, the shared clock contents 1001 may be displayed in a widget form on a screen of the first electronic device 100 as indicated by reference numeral 1005 of FIG. 10B.

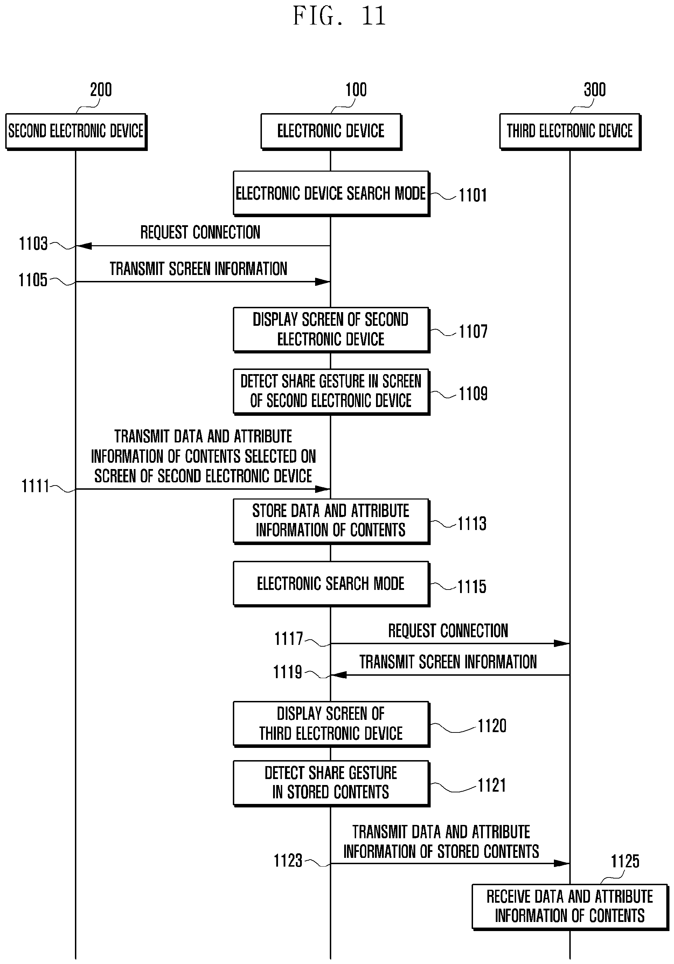

FIG. 11 is a diagram illustrating an example signal flow for processing information between electronic devices having different OSs according to an example useful for understanding the invention.

Referring to FIG. 11 according to various embodiments of the present disclosure, an electronic device 100 may perform an electronic device search mode in operation 1101. By performing the electronic device search mode, the electronic device 100 may display a list of one or more external electronic devices connected to the electronic device 100. In the embodiment of the present disclosure, the following description is based on an example in which a second electronic device 200 and a third electronic device 300 are included in the list. When the second electronic device 200 (that is included in the list) is selected, the electronic device 100 may request a connection to the second electronic device 200 in operation 1103. In response to the connection request, the second electronic device 200 may transmit screen data generated based on at least a part of screen data of the second electronic device 200 to the electronic device 100 in operation 1105. The electronic device 100 may display screen data generated based on at least a part of the received screen data of the second electronic device 200 in operation 1107.

It is assumed that a share gesture is generated on a screen of the electronic device 100 in a state where contents displayed in a screen area of the second electronic device 200 are displayed in the electronic device 100 according to various embodiments of the present disclosure. In operation 1109, the electronic device 100 may detect a share gesture which, in a state where contents displayed on the screen of the second electronic device 200 are selected, displays the contents in a screen area of the electronic device 100. When the share gesture has been detected, in operation 1111, the second electronic device 200 may transmit the data and attribute information of the selected contents to the electronic device 100. In operation 1113, the electronic device 100 may store the data and attribute information of the received contents. That is, a back-up operation may be performed or otherwise executed. The electronic device 100 may be disconnected from the second electronic device 200 and determine whether the electronic device 100 is connected to a new external electronic device. However, this is not limited thereto, the electronic device 100 may perform operation 1115 in a state where the electronic device is kept being the second electronic device 200 without being disconnected from the second electronic device 200.

The electronic device 100 may perform the electronic device search mode in operation 1115 and the electronic device 100 may request a connection to the third electronic device 300 in operation 1117. The third electronic device 300 may transmit screen data generated based on at least a part of screen data of the third electronic device 300 to the electronic device 100 in operation 1119. The electronic device 100 may display the screen data generated based on at least a part of the received screen data of the third electronic device 300 in operation 1120. In operation 1121, the electronic device 100 may detect a share gesture which, in a state of selecting contents stored (backed up) in the electronic device 100, that is, received from the second electronic device 200, displays the contents in a screen area of the third electronic device 300. As the share gesture is generated, the third electronic device 300 may request data and attribute information of the selected contents to the electronic device 100. In response to the request, the electronic device 100 may transmit data and attribute information of the stored contents to the third electronic device 300 in operation 1123. In operation 1125, the third electronic device 300 may receive the data and attribute information of the contents from the electronic device 100 and then have at least a part of identical data and attribute information. Further, when the received contents are executed, the third electronic device 300 may display data identical to data of the second electronic device 200 according to the attribute information.

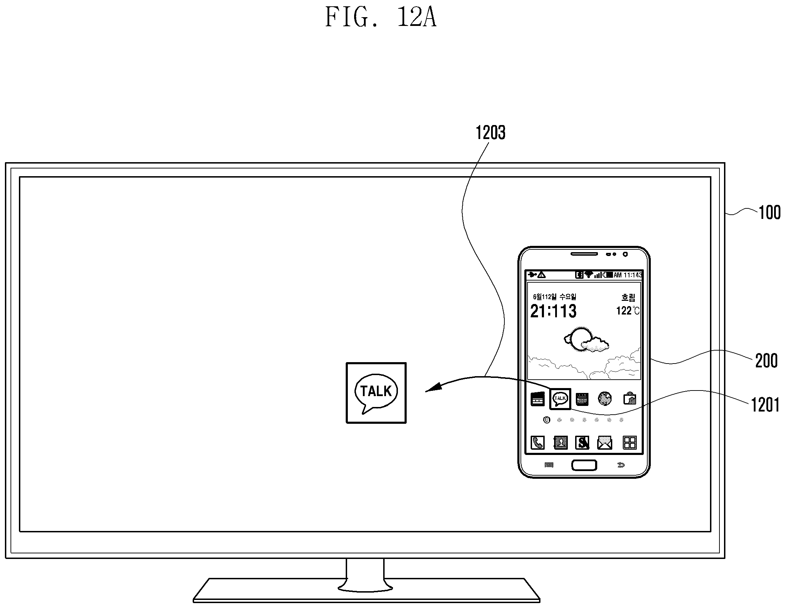

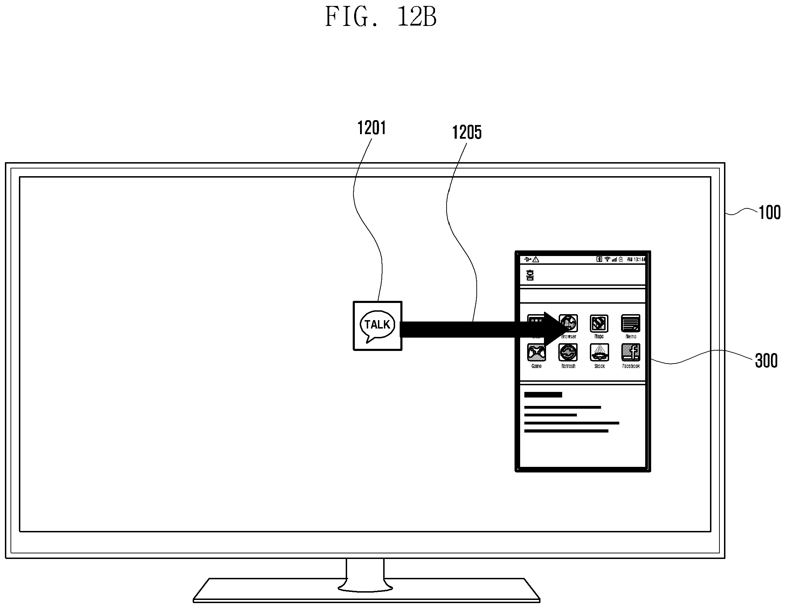

FIGS. 12A and 12B are flowcharts illustrating an example method of processing information between electronic devices having different OSs according to an example useful for understanding the invention.

In FIGS. 12A and 12B, it is assumed that a second electronic device 200 and a third electronic device 300 have identical OSs and the OSs of the second electronic device 200 and the third electronic device 300 are different from an OS of an electronic device 100. In FIG. 12A, the electronic device 100 is connected to the second electronic device 200 and is in a state where screen data generated based on at least a part of screen data of the second electronic device 200 is displayed. Further, in FIG. 12B, the electronic device 100 is disconnected from the second electronic device 200 and connected to a new external electronic device, that is, a third electronic device 300, to display screen data generated based on at least a part of screen data of the third electronic device 300. Since an OS of the second electronic device 200 is different from an OS of the electronic device 100, when the sharing contents are sent from the second electronic device 200 to the electronic device 100, a backup function may be performed. Then, the electronic device 100 is connected to the third electronic device 300 which is the new external electronic device, and when the backed up contents are shared with the third electronic device 300, the electronic device 100 and the third electronic device 300 have contents of the identical OSs. Therefore, according to whether the backed up contents are installed in the third electronic device 300, when the backed up contents have not been installed, an operation of installing the contents is performed. When the backed up contents have been installed, data and attribute information of the contents may be transmitted.

Referring to FIGS. 12A and 12B according to various embodiments of the present disclosure, screen data generated based on at least a part of screen data of the second electronic device 200 may be displayed on a screen of a PC (which is the electronic device 100), as shown FIG. 12A. When a drag gesture to a screen of the first electronic device 100 is generated as indicated by reference numeral 1203, and the drag gesture 1203 was detected in a state where a messenger application 1201 is displayed in a screen area of the second electronic device 200 and selected, data and attribute information of the messenger application 1201 may be stored (i.e., backed up) in the first electronic device 100. When it is detected that the third electronic device 300 is connected to the first electronic device 100, the screen data generated based on at least a part of the screen data of the third electronic device 300 may be displayed as shown in FIG. 12B. When a drag gesture to a third electronic device 300 is generated, as indicated by reference numeral 1205, in a state where contents backed up in the first electronic device 100 of FIG. 12B (such as the messenger application 1201) is selected, the stored information (i.e., data and attribute information) may be transmitted and shared to the third electronic device 300. When the contents stored in the PC have been transmitted to the third electronic device 300, if the messenger application 1201 is not installed in the third electronic device 300, the messenger application is installed and then a function of reconstructing data and attribute information on the messenger application 1201 may be performed.

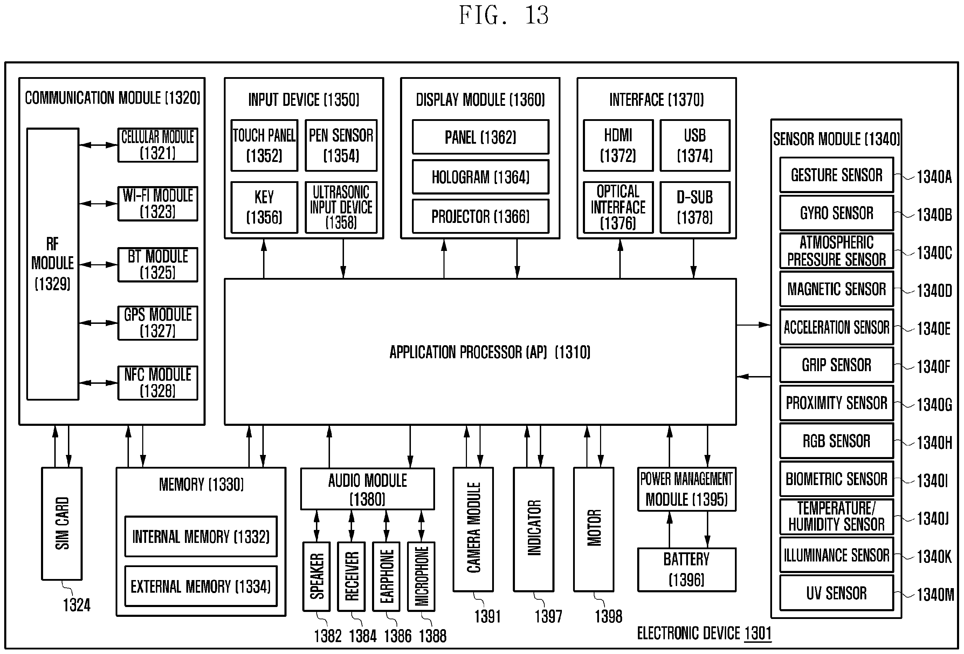

FIG. 13 is a block diagram illustrating a configuration of the electronic device according to various embodiments of the present disclosure. The electronic device 1301 may be of the whole or a part of the electronic device 101 and a part of the electronic device 200. Referring to FIG. 13, the electronic device 1301 may include an Application Processor (AP) 1310, a communication module 1320, a Subscriber Identity Module (SIM) card 1324, a memory 1330, a sensor module 1340, an input device 1350, a display 1360, an interface 1370, an audio module 1380, a camera module 1391, a power management module 1395, a battery 1396, an indicator 1397, and a motor 1398.

The AP 1310 may operate an Operating System (OS) and/or application programs to control a plurality of hardware and/or software components connected to the AP 1310 and perform data-processing and operations on multimedia data. For example, the AP 1310 may be implemented in the form of System on Chip (SoC). According to an embodiment, the AP 1310 may include a Graphic Processing Unit (GPU) (not shown).

The communication module 1320 (e.g. communication interface 160) may perform data communication with other electronic devices (e.g. electronic device 104 and server 106) through a network. According to an embodiment, the communication module 1320 may include a cellular module 1321, a Wi-Fi module 1323, a BT module 1325, a GPS module 1327, an NFC module 1328, and a Radio Frequency (RF) module 1329.

The cellular module 1321 is responsible for voice and video communication, text messaging, and Internet access services through a communication network (e.g. LTE, LTE-A, CDMA, WCDMA, UMTS, WiBro, and GSM networks). The cellular module 1321 may perform identification and authentication of electronic devices in the communication network using the SIM card 1324. According to an embodiment, the cellular module 1321 may perform at least one of the functions of the AP 1310. For example, the cellular module 1321 may perform at least a part of the multimedia control function.

According to an embodiment, the cellular module 1321 may include a Communication Processor (CP). The cellular module 1321 may be implemented in the form of SOC. Although the cellular module 1321 (e.g. communication processor), the memory 1330, and the power management module 1395 are depicted as independent components separated from the AP 1310, the present disclosure is not limited thereto but may be embodied in a way that the AP includes at least one of the components (e.g. cellular module 1321).

According to an embodiment, each of the AP 1310 and the cellular module 1321 (e.g. communication processor) may load a command or data received from at least one of the components on a non-volatile or volatile memory and process the command or data. The AP 1310 or the cellular module 1321 may store the data received from other components or generated by at least one of other components in the non-volatile memory.

Each of the Wi-Fi module 1323, the BT module 1325, the GPS module 1327, and the NFC module 1328 may include a processor for processing the data it transmits/receives. Although the cellular module 1321, the Wi-Fi module 1323, the BT module 1325, the GPS module 1327, and the NFC module 1328 are depicted as independent blocks; at least two of them (e.g. communication processor corresponding to the cellular module 1321 and Wi-Fi processor corresponding to the Wi-Fi module 1323) may be integrated in the form of SoC.

The RF module 1329 is responsible for data communication, e.g. transmitting/receiving RF signals. Although not depicted, the RF module 1329 may include a transceiver, a Power Amp Module (PAM), a frequency filter, and a Low Noise Amplifier (LNA). The RF module 1329 also may include the elements for transmitting/receiving electric wave in free space, e.g. conductor or conductive wire. Although FIG. 13 is directed to the case where the cellular module 1321, the Wi-Fi module 1323, the BT module 1325, the GPS module 1327, and the NFC module 1328 are sharing the RF module 1329, the present disclosure is not limited thereto but may be embodied in a way that at least one of the Wi-Fi module 1323, the BT module 1325, the GPS module 1327, and the NFC module 1328 transmits/receives RF signals an independent RF module.

The SIM card 1324 may be designed so as to be inserted into a slot formed at a predetermined position of the electronic device. The SIM card 1324 may store unique identity information (e.g. Integrated Circuit Card Identifier (ICCID)) or subscriber information (e.g. International Mobile Subscriber Identity (IMSI)).

The memory 1330 (e.g. memory 130, storage unit 220) may include at least one of the internal memory 1332 or an external memory 1334. The internal memory 1332 may include at least one of a volatile memory (e.g. Dynamic Random Access Memory (DRAM), Static RAM (SRAM), Synchronous Dynamic RAM (SDRAM) or a non-volatile memory (e.g. One Time Programmable Read Only Memory (OTPROM), Programmable ROM (PROM), Erasable and Programmable ROM (EPROM), Electrically Erasable and Programmable ROM (EEPROM), mask ROM, flash ROM, NAND flash memory, and NOR flash memory)

According to an embodiment, the internal memory 1332 may be a Solid State Drive (SSD). The external memory 1334 may be a flash drive such as Compact Flash (CF), Secure Digital (SD), micro-SD, Mini-SD, extreme Digital (xD), and Memory Stick. The external memory 1334 may be connected to the electronic device 1301 through various interfaces functionally. According to an embodiment, the electronic device 1301 may include a storage device (or storage medium) such as hard drive.

When a gesture for sharing the contents between the electronic devices having different OSs is generated, the memory 1330 may store data and attribute information of the content.

The sensor module 1340 may measure physical quantity or check the operation status of the electronic device 1301 and convert the measured or checked information to an electric signal. The sensor module 1340 may include at least one of gesture sensor 1340A, Gyro sensor 1340B, barometric sensor 1340C, magnetic sensor 1340D, acceleration sensor 1340E, grip sensor 1340F, proximity sensor 1340G, color sensor 1340H (e.g. Red, Green, Blue (RGB) sensor), bio sensor 13401, temperature/humidity sensor 1340J, illuminance sensor 1340K, and Ultra Violet (UV) sensor 1340M. Additionally or alternatively, the sensor module 1340 may include E-nose sensor (not shown), Electromyography (EMG) sensor (not shown), Electroencephalogram (EEG) sensor (not shown), Electrocardiogram (ECG) sensor (not shown), Infrared (IR) sensor (not shown), iris sensor (not shown), or fingerprint sensor (not shown). The sensor module 1340 may further include a control circuit for controlling at least one of the sensors included therein.

The input device 1350(e.g. input unit 240) may include a touch panel 1352, a (digital) pen sensor 1354, keys 3156, and an ultrasonic input device 1358. The touch panel 1352 may be one of capacitive, resistive, infrared, microwave type touch panel. The touch panel 1352 may include a control circuit. In the case of the capacitive type touch panel, it is possible to detect physical contact or approximation. The touch panel 1352 may further include a tactile layer. In this case, the touch panel 1352 may provide the user with haptic reaction.

The (digital) pen sensor 1354 may be implemented with a sheet with the same or similar way as touch input of the user or a separate recognition sheet. The keys 1356 may include physical buttons, optical key, and keypad. The ultrasonic input device 1358 is a device capable of checking data by detecting sound wave through a microphone 1388 and may be implemented for wireless recognition. According to an embodiment, the electronic device 1301 may receive the user input made by means of an external device (e.g. computer or server) connected through the communication module 1320.

The display 1360 (e.g. display module 150, display unit 230) may include a panel 1362, a hologram device 1364, and a projector 1366. The panel 1362 may be a Liquid Crystal Display (LCD) panel or an Active Matrix Organic Light Emitting Diodes (AMOLED) panel. The panel 1362 may be implemented so as to be flexible, transparent, and/or wearable. The panel 1362 may be implemented as a module integrated with the touch panel 1352. The hologram device 1364 may present 3-dimentional image in the air using interference of light. The projector 1366 may project an image to a screen. The screen may be placed inside or outside the electronic device. According to an embodiment, the display 1360 may include a control circuit for controlling the panel 1362, the hologram device 1364, and the projector 1366.

The interface 1370 may include a High-Definition Multimedia Interface (HDMI) 1372, a Universal Serial Bus (USB) 1374, an optical interface 1376, and a D-subminiature (D-sub) 1378. The interface 1370 may include the communication interface 160 as shown in FIG. 1. Additionally or alternatively, the interface 1370 may include a Mobile High-definition Link (MHL) interface, a SD/MMC card interface, and infrared Data Association (irDA) standard interface.

The audio module 1380 may convert sound to electric signal and vice versa. At least a part of the audio module 1380 may be included in the input/output interface 140 as shown in FIG. 1. The audio module 1380 may process the audio information input or output through the speaker 1382, the receiver 1384, the earphone 1386, and the microphone 1388.

The camera module 1391 is a device capable of taking still and motion pictures and, according to an embodiment, includes at least one image sensor (e.g. front and rear sensors), a lens (not shown), and Image Signal Processor (ISP) (not shown), or a flash (e.g. LED or xenon lamp) (not shown).

The power management module 1395 may manage the power of the electronic device 1301. Although not shown, the power management module 1395 may include a Power Management Integrated Circuit (PMIC), a charger Integrated Circuit (IC), a battery, and a battery or fuel gauge.

The PMIC may be integrated into an integrated circuit or SoC semiconductor. The charging may be classified into wireless charging and wired charge. The charger IC may charge the battery and protect the charger against overvoltage or overcurrent. According to an embodiment, the charger IC may include at least one of wired charger or wireless charger ICs. Examples of the wireless charging technology includes resonance wireless charging and electromagnetic wave wireless charging, and there is a need of extra circuit for wireless charging such as coil loop, resonance circuit, and diode.

The battery gauge may measure the residual power of the battery 1396, charging voltage, current, and temperature. The battery 1396 may store or generate power and supply the stored or generated power to the electronic device 1301. The battery 1396 may include a rechargeable battery or a solar battery.

The indicator 1397 may display operation status of the electronic device 1301 or a part of the electronic device, booting status, messaging status, and charging status. The motor 1398 may converts the electronic signal to mechanical vibration. Although not shown, the electronic device 1301 may include a processing unit (e.g. GPU) for supporting mobile TV. The processing unit for supporting the mobile TV may be able to processing the media data abiding by the broadcast standards such Digital Multimedia Broadcasting (DMB), Digital Video Broadcasting (DVB), and media flow.

Each of the components of the electronic device according to various embodiments of the present disclosure may be implemented by one or more components and the name of the corresponding component may vary depending on a type of the electronic device. The electronic device according to various embodiments of the present disclosure may include at least one of the above described components, a few of the components may be omitted, or additional components may be further included. Also, some of the components of the electronic device according to various embodiments of the present disclosure may be combined to form a single entity, and thus may equivalently execute functions of the corresponding components before being combined.

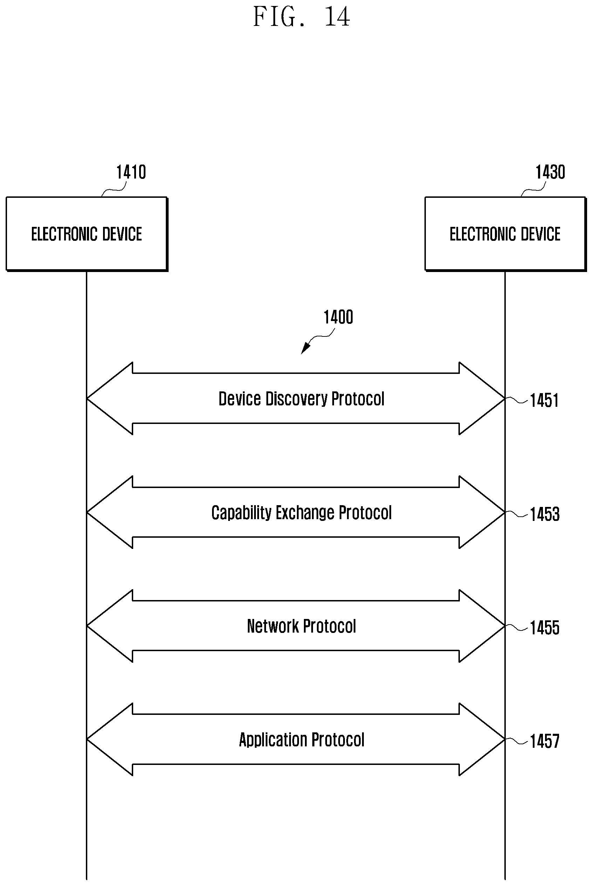

FIG. 14 illustrates communication protocols 1400 between a plurality of electronic devices (e.g., an electronic device 1410 and an electronic device 1430) according to various embodiments.

Referring to FIG. 14, for example, the communication protocols 1400 may include a device discovery protocol 1451, a capability exchange protocol 1453, a network protocol 1455, and an application protocol 1457.

According to an embodiment, the device discovery protocol 1451 may be a protocol by which the electronic devices (e.g., the electronic device 1410 and the electronic device 1430) detect external devices capable of communicating with the electronic devices, or connect with the detected external electronic devices. For example, the electronic device 1410 (e.g., the electronic device 101, the electronic device 200) may detect the electronic device 1430 (e.g., the electronic device 104) as an electronic device capable of communicating with the electronic device 1410 through communication methods (e.g., WiFi, BT, USB, or the like) which are available in the electronic device 1410, by using the device discovery protocol 1451. In order to connect with the electronic device 1430 for communication, the electronic device 1410 may obtain and store identification information on the detected electronic device 1430, by using the device discovery protocol 1451. The electronic device 1410 may initiate the communication connection with the electronic device 1430, for example, based on at least the identification information.

According to an embodiment, the device discovery protocol 1451 may be a protocol for authentication between a plurality of electronic devices. For example, the electronic device 1410 may perform authentication between the electronic device 1410 and the electronic device 1430, based on at least communication information {e.g., Media Access Control (MAC), Universally Unique Identifier (UUID), Subsystem Identification (SSID), Internet Protocol (IP) address} for connection with the electronic device 1430.

According to an embodiment, the capability exchange protocol 1453 may be a protocol for exchanging information related to service functions which can be supported by at least one of the electronic device 1410 or the electronic device 1430. For example, the electronic device 1410 and the electronic device 1430 may exchange information on service functions which are currently supported by each electronic device with each other through the capability exchange protocol 1453. The exchangeable information may include identification information indicating a specific service among a plurality of services supported by the electronic device 1410 and the electronic device 1430. For example, the electronic device 1410 may receive identification information for a specific service provided by the electronic device 1430 from the electronic device 1430 through the capability exchange protocol 1453. In this case, the electronic device 1410 may determine whether the electronic device 1410 can support the specific service, based on the received identification information.

According to an embodiment, the network protocol 1455 may be a protocol for controlling the data flow which is transmitted and received between the electronic devices (e.g., the electronic device 1410 and the electronic device 1430) connected with each other for communication, for example, in order to provide interworking services. For example, at least one of the electronic device 1410 or the electronic device 1430 may perform the error control or the data quality control, by using the network protocol 1455. Alternatively or additionally, the network protocol 1455 may determine the transmission format of data transmitted and received between the electronic device 1410 and the electronic device 1430. In addition, at least one of the electronic device 1410 or the electronic device 1430 may manage a session (e.g., session connection or session termination) for the data exchange between them, by using the network protocol 1455.

According to an embodiment, the application protocol 1457 may be a protocol for providing a procedure or information to exchange data related to services which are provided to the external devices. For example, the electronic device 1410 (e.g., the electronic device 101) may provide services to the electronic device 1430 (e.g., the electronic device 104 or the server 106) through the application protocol 1457.

According to an embodiment, the communication protocol 1400 may include standard communication protocols, communication protocols designated by individuals or groups (e.g., communication protocols designated by communication device manufacturers or network providers), or a combination thereof.

The term "module" used in the present disclosure may refer to, for example, a unit including one or more combinations of hardware, software, and firmware. The "module" may be interchangeably used with a term, such as unit, logic, logical block, component, or circuit. The "module" may be the smallest unit of an integrated component or a part thereof. The "module" may be the smallest unit that performs one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a computer-readable storage medium in a programming module form. When he command is executed by one or more processors (for example, the processor 210), the one or more processors may execute a function corresponding to the command. The computer-readable storage medium may be, for example, the storage unit (e.g., memory) 220. At least a part of the programming module may be implemented (for example, executed) by, for example, the processor 210. At least some of the programming modules may include, for example, a module, a program, a routine, a set of instructions or a process for performing one or more functions.

The computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices specially configured to store and perform a program instruction (for example, programming module), such as a Read Only Memory (ROM), a Random Access Memory (RAM), a flash memory and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

A recording medium for processing information in an electronic device according to an embodiment of the present disclosure may include a recording medium which has a program for executing a method recorded therein, the method including: displaying at least a part of data displayed on a screen of an external electronic device functionally connected to the display unit, selecting contents to be shared among contents displayed on the screen of the electronic device on the basis of a first input with respect to the screen of the electronic device, requesting information related to the selected contents to the external electronic device in response to a second input related to the electronic device, determining a state of the electronic device related to the selected contents on the basis of information received in response to the request, and executing functions or contents corresponding to the selected contents.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer.

Meanwhile, the example embodiments disclosed in the specification and drawings are merely presented to easily describe the technical contents of the present disclosure and help the understanding of the present disclosure and are not intended to limit the scope of the present disclosure. Therefore, it should be construed that all modifications or modified forms drawn by the technical idea of the present disclosure in addition to the embodiments disclosed herein are included in the scope of the present disclosure.

## Claims

1. A method of processing information on an electronic device (100), the method comprising:
displaying (607) a first portion of data displayed by a first communicatively coupled external electronic device (300);
displaying (613) a second portion of data displayed by a second communicatively coupled external electronic device (200);
detecting (615) a share gesture selecting content (701) to be shared from the second portion of the data;
in response to the share gesture, transmitting, from the first external electronic device, a request to the second external electronic device for information related to the selected content; and
receiving (619), by the first external electronic device, the requested information from the second external electronic device,
wherein the operating system of the first external electronic device and the operating system of the second external electronic device are identical.

2. The method of claim 1, wherein the requested information comprises at least attribute information for the selected content.

3. The method of claim 1, wherein the selected content comprises at least one of an application execution icon, a web page bookmark icon, a folder, a file, an image, a video, an MP3, a multimedia file, a message, an e-mail, and a document program file.

4. The method of claim 2, wherein the attribute information comprises at least one of an icon, a thumbnail, a list item, a menu item, a text item, a link item, information classified for each item, information classified according to a user configuration, a content name, a valid period, a supported OS, and an installation URL address.

5. The method of claim 1, wherein the share gesture comprises at least one of a touch gesture and a user gaze information.

6. An electronic device for processing information configured to perform the method according to any of claims 1-5.

## Patentansprüche

1. Verfahren zum Verarbeiten von Informationen einer elektronischen Vorrichtung (100), wobei das Verfahren Folgendes umfasst:
Anzeigen (607) eines ersten Abschnitts von Daten, die von einer ersten kommunikativ gekoppelten externen elektronischen Vorrichtung (300) angezeigt werden;
Anzeigen (613) eines zweiten Abschnitts von Daten, die von einer zweiten kommunikativ gekoppelten externen elektronischen Vorrichtung (200) angezeigt werden;
Erkennen (615) eines Inhalts (701) zum Auswählen einer Austauschgeste, der von dem zweiten Abschnitt der Daten ausgetauscht werden soll;
als Reaktion auf die Austauschgeste, Senden, von der ersten externen elektronischen Vorrichtung, einer Anfrage an die zweite externe elektronische Vorrichtung nach Informationen, die sich auf den ausgewählten Inhalt beziehen; und
Empfangen (619), von der ersten externen elektronischen Vorrichtung, der angeforderten Informationen von der zweiten externen elektronischen Vorrichtung,
wobei das Betriebssystem der ersten externen elektronischen Vorrichtung und das Betriebssystem der zweiten externen elektronischen Vorrichtung identisch sind.

2. Verfahren nach Anspruch 1, wobei die angeforderten Informationen mindestens Attributinformationen für den ausgewählten Inhalt umfassen.

3. Verfahren nach Anspruch 1, wobei der ausgewählte Inhalt mindestens eines von einem Anwendungsausführungssymbol, einem Webseiten-Lesezeichensymbol, einem Ordner, einer Datei, einem Bild, einem Video, einer MP3, einer Multimediadatei, einer Nachricht, einer E-Mail und einer Dokumentprogrammdatei umfasst.

4. Verfahren nach Anspruch 2, wobei die Attributinformationen mindestens eines von einem Icon, einem Thumbnail, einem Listenelement, einem Menüelement, einem Textelement, einem Verknüpfungselement, für jedes Element klassifizierten Informationen und gemäß einer Benutzerkonfiguration klassifizierten Informationen, einem Inhaltsnamen, einem gültigen Zeitraum, einem unterstützten OS und einer Installations-URL-Adresse umfasst.

5. Verfahren nach Anspruch 1, wobei die Austauschgeste mindestens eine Berührungsgeste und eine Benutzerblickgeste umfasst.

6. Elektronische Vorrichtung zum Verarbeiten von Informationen, die konfiguriert ist, das Verfahren nach einem der Ansprüche 1 bis 5 durchzuführen.

## Revendications

1. Procédé de traitement d'information sur un dispositif électronique (100), le procédé comprenant de :
afficher (607) une première portion des données affichées par un premier dispositif électronique externe couplé en communication (300) ;
afficher (613) une seconde portion des données affichées par un second dispositif électronique externe couplé en communication (200) ;
détecter (615) un geste de partage sélectionnant un contenu (701) à partager dans la seconde portion de données ;
en réponse au geste de partage, transmettre, à partir du premier dispositif électronique externe, une demande vers le second dispositif électronique externe d'une information relative au contenu sélectionné ; et
recevoir (619), par le premier dispositif électronique externe, l'information demandée provenant du second dispositif électronique externe,
dans lequel le système d'exploitation du premier dispositif électronique externe et le système d'exploitation du second dispositif électronique externe sont identiques.

2. Procédé selon la revendication 1, dans lequel l'information demandée comprend au moins une information d'attribut pour le contenu sélectionné.

3. Procédé selon la revendication 1, dans lequel le contenu sélectionné comprend au moins un d'une icône d'exécution d'applications, une icône de marque-page de page Web, un dossier, un fichier, une image, une vidéo, un MP3, un fichier multimédia, un message, un e-mail et un fichier de programme de document.

4. Procédé selon la revendication 2, dans lequel l'information d'attribut comprend au moins un d'une icône, une image miniature, un élément d'une liste, un élément de menu, un élément textuel, un élément de lien, une information classifiée pour chaque élément, une information classifiée selon une configuration d'utilisateur, un nom de contenu, une période valide, un système d'exploitation pris en charge et une adresse URL d'installation.

5. Procédé selon la revendication 1, dans lequel le geste de partage comprend au moins un d'un geste tactile et une information de regard d'utilisateur.

6. Dispositif électronique pour le traitement d'informations configurées pour mettre en oeuvre le procédé selon une quelconque des revendications 1-5.
